Europäisches Patentamt

European Patent Office

Office européen des brevets

(19)

(11) EP 0 839 295 B1

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(21) Anmeldenummer: 96925728.6

(22) Anmeldetag: **11.07.1996**

(51) Int Cl.$^6$: **F16H 61/06**, B60K 41/06

(86) Internationale Anmeldenummer:
**PCT/EP96/03048**

(87) Internationale Veröffentlichungsnummer:
**WO 97/04254 (06.02.1997 Gazette 1997/07)**

(54) **AUTOMATISCH SCHALTBARES VORGELEGE-WECHSELGETRIEBE, INSBESONDERE FÜR KRAFTFAHRZEUGE**

COUNTERSHAFT AUTOMATIC GEARBOX, IN PARTICULAR AN AUTOMATIC GEARBOX FOR MOTOR VEHICLES

BOITE DE VITESSES AUTOMATIQUE A ARBRE DE RENVOI, NOTAMMENT POUR AUTOMOBILES

(84) Benannte Vertragsstaaten:
**DE FR GB**

(30) Priorität: **19.07.1995 DE 19526273**

(43) Veröffentlichungstag der Anmeldung:
**06.05.1998 Patentblatt 1998/19**

(73) Patentinhaber:
• **Ford-Werke Aktiengesellschaft**
**50735 Köln (DE)**
Benannte Vertragsstaaten:
**DE**
• **FORD FRANCE SOCIETE ANONYME**
**92506 Rueil Malmaison Cedex (FR)**
Benannte Vertragsstaaten:
**FR**
• **FORD MOTOR COMPANY LIMITED**
**Brentwood, Essex CM13 3BW (GB)**
Benannte Vertragsstaaten:
**GB**

(72) Erfinder:
• **FLINTROP, Thomas**
**D-51061 Köln (DE)**
• **NAJORK, Rolf**
**D-51429 Bergisch Gladbach (DE)**
• **KRAUSS, Christian**
**D-50733 Köln (DE)**
• **WOLLNY, Thomas**
**D-50997 Köln (DE)**

(74) Vertreter: **Bonsmann, Manfred, Dipl.-Ing.**
**Kaldenkirchener Strasse 35a**
**41063 Mönchengladbach (DE)**

(56) Entgegenhaltungen:
**WO-A-89/01421          WO-A-94/12814**
**US-A- 5 043 892**

**Beschreibung**

Die Erfindung bezieht sich auf ein automatisch schaltbares Vorgelege-Wechselgetriebe, insbesondere für Kraftfahrzeuge, der im Oberbegriff des Patentanspruches 1 erläuterten Art.

Aus der GB 1 281 106 A ist ein automatisch schaltbares Vorgelege-Wechselgetriebe, insbesondere für Kraftfahrzeuge, bekannt, bei dem in einem Getriebegehäuse eine Vielzahl von miteinander ständig in Eingriff stehenden Zahnradpaare angeordnet sind, die über Klauenkupplungen wahlweise mit ihren entsprechenden Wellen verbindbar sind und wobei die Klauenkupplungen über elektronisch gesteuerte hydraulische Hilfskrafteinrichtungen betätigbar sind, um in Abhängigkeit von Betriebsparametern des Antriebsmotores und des Kraftfahrzeuges automatische Gangwechsel zu bewerkstelligen und wobei alle erforderlichen Bauelemente, wie Hydraulikpumpe, Betätigungszylinder und dergleichen, in einer am Getriebegehäuse anbringbaren Baueinheit zusammengefaßt sind.

Das bekannte automatisch schaltbare Vorgelege-Wechselgetriebe, insbesondere für Kraftfahrzeuge, weist den Nachteil auf, daß es zum Schalten der einzelnen Gangstufen nur Klauenkupplungen verwendet und daher an der Vorgelegewelle eine Beschleunigungs- und Verzögerungseinheit vorgesehen werden muß, die in Abhängigkeit von an den Wellen angeordneten Drehzahlsensoren derart gesteuert wird, daß zunächst ein Gleichlauf der mit einander in Eingriff zu bringenden Klauenkupplungsteile hergestellt wird, bevor durch Betätigen der elektrisch gesteuerten hydraulischen Hilfskrafteinrichtungen das Einlegen der Gangstufe entsprechend schnell erfolgen kann.

Aus der Zeitschrift "Automobil-Revue Nr. 16, vom 15. April 1993", "Auf den Spuren von Senna, Prost & Co," wird von einem automatisch schaltbaren Vorgelege-Wechselgetriebe, insbesondere für Kraftfahrzeuge, berichtet, bei dem in einem Getriebegehäuse eine Vielzahl von miteinander ständig in Eingriff stehenden Zahnradpaaren angeordnet ist und über Synchronisiereinrichtungen miteinander in Eingriff bringbar sind, wobei die Betätigung der Synchronisiereinrichtungen über eine elektronische Steuerung mittels einer über eine Hilfskrafteinrichtung betätigten Kurvensteuerung erfolgt, wobei über die Anordnung der für die Hilfskrafteinrichtung erforderlichen Bauelemente nichts berichtet wird.

Aus der Zeitschrift "Automobil-Revue Nr. 12 vom 17.03.1994", "Schalten wie in Formel 1", wird über automatisch schaltbare Vorgelege-Wechselgetriebe berichtet, wobei ganz allgemein darüber berichtet wird, daß eine elektronische Steuerung die pneumatische Hilfskrafteinrichtung derart betätigt, daß ein Wechseln der Gangstufen unter bewußter Schonung der Synchronisiereinrichtungen vorgenommen wird. Über die Art und Weise, wie diese gefühlvolle Betätigung bewerkstelligt wird, wird nichts berichtet.

Die Aufgabe der Erfindung ist es, ein automatisch schaltbares Vorgelege-Wechselgetriebe, insbesondere für Kraftfahrzeuge zu schaffen, das von einem Großserienhandschaltgetriebe mit in diesem üblichen Synchronisiereinrichtungen ausgeht und das nur durch Aufsetzen einer Baueinheit mit allen erforderlichen Einheiten, die zu einem automatischen Schalten des Getriebes erforderlich sind, zu einem automatisch schaltbaren Vorgelege-Wechselgetriebe umgestaltet werden kann.

Die Erfindung geht daher von dem eingangs genannten nächstkommenden Stand der Technik aus, der den Oberbegriff des Patentanspruches 1 bildet, wobei jedoch noch die Anwendung von an sich bekannten Synchronisiereinrichtungen mit aufgenommen wurde.

Die Aufgabe der Erfindung ist es, ein automatisch schaltbares Vorgelege-Wechselgetriebe, insbesondere für Kraftfahrzeuge, der im Oberbegriff des Patentanspruches 1 erläuterten Art derart auszubilden, daß die für das manuelle Schalten vorgesehenen Synchronisiereinrichtungen durch die elektronisch gesteuerte hydraulisch betätigte Schaltung nicht übermäßig beansprucht werden, sondern vielmehr derart angepaßt betätigt werden, daß ein hoher Schaltkomfort und eine hohe Lebensdauer des Getriebes erzielt werden kann.

Gemäß der Erfindung wird diese Aufgabe gelöst, indem bei einem automatisch schaltbaren Vorgelege-Wechselgetriebe, insbesondere für Kraftfahrzeuge, der im Oberbegriff des Patentanspruches 1 erläuterten Art, die im Kennzeichenteil des Patentanspruches 1 aufgezeigten Merkmale angewendet werden.

Dadurch, daß der Schaltweg für jede Schaltbewegung über zwei Sensoren, einen für den X-Weg und einen für den Y-Weg erfaßt und die Strecke zwischen den Einrückpunkten zu 100 % normiert festgelegt wird und die Schaltkraft in Abhängigkeit von der Gangstufe und der vorhandenen Drehzahldifferenz über den Einrückweg derart variiert wird, daß abhängig von der Funktionsphase eine niedrigere Kraft während der Synchronisationsphase, eine höhere Kraft während der Durchschaltphase und eine geringere Kraft während der Eindockphase bereitgestellt wird, wird eine Schonung der Synchronisierung erreicht, die sich in einem hohen Schaltkomfort und einer hohen Lebensdauer wiederspiegelt. Beim Abwärtsschalten wird hierbei eine höhere Kraft und beim Aufwärtsschalten wird hierbei eine geringere Kraft aufgewendet. Ebenso wird bei hoher Drehzahldifferenz und bei höherem Motordrehmoment eine höhere Schaltkraft bereitgestellt, um die entsprechenden Gangwechsel optimal auszuführen.

Hierbei wird die Schaltkraft in einem 3-dimensionalen Kennfeld als Funktion des Schaltweges und der Drehzahldifferenz bzw. des dynamischen Lastfaktors abgelegt.

Die Erfindung wird anhand einer schematischen Darstellung des automatisch schaltbaren Vorgelege-Wechselgetriebes, insbesondere für Kraftfahrzeuge, näher erläutert. Es zeigt:

Fig. 1 eine schematische Darstellung des Funktionsaufbaues eines automatisch schaltbaren Vorgelege-Wechselgetriebes, insbesondere für Kraftfahrzeuge, mit zur leichteren Verständlichkeit als Einzelsysteme aufgezeigten Steuer- und Hilfskrafteinheiten für das zu schaltende Getriebe und

Fig. 2 eine Darstellung des 3-dimensionalen Schaltkraft-Kennfeldes bezogen auf den Schaltweg und einen dynamischen Lastfaktor;

Fig. 3 ein Diagramm der Drehmomentregelung vor einer Schaltung;

Fig. 4 ein Diagramm der Drehmomentregelung nach einer Schaltung;

Fig. 5 eine Darstellung eines 3-dimensionalen Kennfeldes der Drehmomentmodulation und

Fig. 6 ein Diagramm der Modulation der Motor-Beschleunigung über dem Motor-Drehmoment.

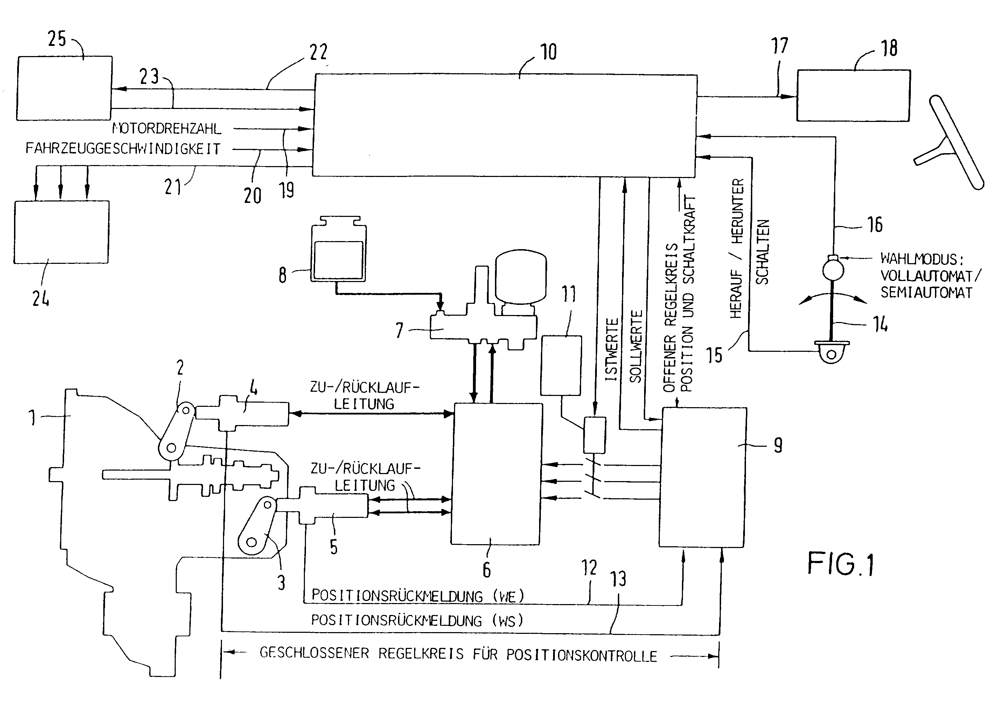

In Fig. 1 ist ein Vorgelege-Wechselgetriebe 1 angedeutet, an dem zwei Schalteinrichtungen 2 und 3 vorgesehen sind, von denen die eine, Schalteinrichtung 2, zum Vorwählen einer Schaltgasse und die andere, Schalteinrichtung 3, zum Durchführen der Schaltung vorgesehen ist, Die beiden Schalteinrichtungen 2 und 3 werden jeweils über Hilfskrafteinrichtungen 4 und 5 betätigt, die von einer Ventilsteuereinrichtung 6 über entsprechende Leitungen angesteuert werden.

Die Ventilsteuereinheit 6 wird über eine Druckmitteleinheit 7, die an einen Druckmittelbehälter 8 angeschlossen ist, mit hydraulischen Druckmittel versorgt.

Die elektronische Steuerung der hydraulischen Ventile in der Ventilsteuereinheit 6 erfolgt über einen Ventilkontrollrechner 9 und eine Steuereinheit 10.

Der Ventilkontrollrechner 9 steht über ein Sicherheitsrelais 11 in Verbindung mit der Steuerventileinheit 6. Dem Ventilkontrollrechner 9 werden über entsprechende Leitungen 12 und 13 jeweils die Stellungen der Hilfskrafteinrichtungen 4 und 5 mitgeteilt, die innerhalb der Schaltwege auf 100 % normiert sind. Die Leitung 13 meldet hierbei den Betrag des Vorwählweges (WS = Weg-Selector) und die Leitung 12 meldet den Betrag des Einrückweges (WE = Engagement).

Die Steuereinheit 10 erhält Signale von einem Schalthebel 14, wobei über eine Leitung 15 eine vom Fahrer beeinflußte Gangwahl möglich ist, während über eine Leitung 16 ein vollautomatischer Betrieb des Wechselgetriebes möglich ist, abhängig davon, ob der Fahrer durch Betätigen eines Wählknopfes die gewünschte Betriebsart auswählt. Über eine Leitung 17 wird hierbei auf einem Display 18 dem Fahrer die jeweils eingelegte Gangstufe zur Kenntnis gebracht.

Die Steuereinheit 10 wird über an sich im Kraftfahrzeug vorhandene Sensoren mit verschiedenen Betriebsdaten versorgt, so z.B. über eine Leitung 19 mit der Motordrehzahl und über eine Leitung 20 mit der Fahrgeschwindigkeit. Über Leitung 21 kann die Steuereinheit 10 Einfluß auf die Betriebsweise des Verbrennungsmotors und mit den Leitungen 22 und 23 Einfluß auf die Betriebsweise der automatisierten Kupplung ausüben. Zur Steuerung der Kupplung ist ein Kupplungsrechner 25 und zur Steuerung der Drosselklappe ein Drosselklappenrechner 24 vorgesehen.

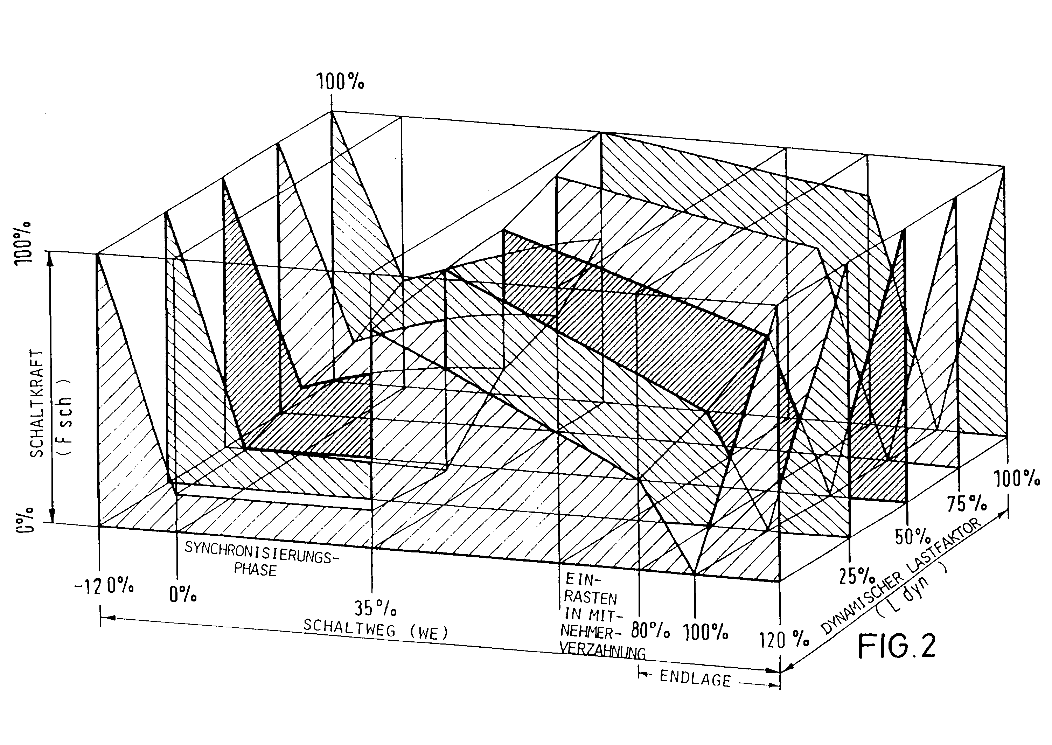

In Fig. 2 ist das 3-dimensionale Schaltkraft-Kennfeld über dem Schaltweg und dem dynamischen Lastfaktor aufgezeigt.

Festlegung der Einrückpunkte:

Zu Beginn jeder Schaltbewegung wird der Weg zwischen der aktuellen Ausgangsposition und der Zielposition zu 100 [%] normiert. Start bei 0 [%] entspricht z.B. der Position Neutral in der Gasse, Ziel bei 100 [%] entspricht dem eingelegten Gang in der Endrastung (Endlage).

Aus Messungen ist bekannt, daß die Synchronisation bei Einlegen eines Ganges zwischen 15 und 30 [%] und der Formschluß der Klauenverzahnung zwischen 80 und 85 [%] des Weges stattfindet.

Bestimmung des dynamischen Lastfaktors:

Vor Beginn eines Schaltvorganges wird aus der Stellung der Drosselklappe und der Motordrehzahl das von der Verbrennungskraftmaschine erzeugte Moment berechnet.

Mit Hilfe der Information des geschalteten und des zu schaltenden Ganges wird die zu erwartende Differenzdrehzahl zwischen den beiden Gängen ermittelt. Diese Differenzdrehzahl muß von der Synchronisierung zu Null abgebaut werden, bevor der Gang bei Differenzdrehzahl Null geräusch- und verschleißfrei einrasten kann.

Soll eine Schaltung immer gleich lange dauern, muß mit stei gender Differenzdrehzahl eine steigende Kraft aufgewende werden (Linearer Zusammenhang).

Aus der vorberechneten Differenzdrehzahl wird mit Hilfe einer Tabelle ein Faktor 1 ermittelt, z.B.

Tabelle 1:

| Ermittlung des Faktors 1 aus der Differenzdrehzahl (Beispiel) | | | | |
|---|---|---|---|---|
| Differenzdrehzahl [min$^{-1}$] | 0 | 500 | 1000 | 2000 |
| Faktor 1 [-] | 0 | 0.6 | 1 | 2 |

Aus dem aktuellen Moment der Verbrennungskraftmaschine wird ein zweiter Faktor 2 ermittelt, der die Fahrsituation auf der Seite des Fahrerwunsches erfaßt (hier könnte man z.B. auch auf die Stellung des Fahrpedals bzw. auf den Gradient der Stellung des Fahrpedals eingehen, um den Fahrerwunsch zu erfassen), z.B.:

Tabelle 2:

| Ermittlung des Faktors 2 aus dem Drehmoment des Motors vor der Schaltung (Beispiel) | | | | |
|---|---|---|---|---|
| Drehmomentvor Schaltung [Nm] | 0 | 80 | 120 | 160 |
| Faktor 2 [-] | 1 | 1.3 | 1.6 | 2 |

Die beiden Faktoren werden nun multipliziert und ergeben einen Zeiger auf die Reihe des Schaltkraft-Kennfeldes oder auf einen Lastfaktor [%] in Abhängigkeit von der Fahrsituation, z.B.:

Reihe (oder Lastfaktor in % s. Fig. 2) = Faktor 1 * Faktor 2

Bestimmung der Schaltkraft in Abhängigkeit von Schaltweg und Lastfaktor.

Im Schaltkraft-Kennfeld, Fig. 2, ergeben die zwei Eingangsgrößen Schaltweg und Lastfaktor als Ausgang den aktuellen Kraftwert, z.B.:

Tabelle 3:

| Ermittlung der aktuellen Schaltkraft F (Sch) aus Lastfaktor und Schaltweg. | | | | | | |
|---|---|---|---|---|---|---|
| Weg [%] | | | | | | |
| (Reihe) Last-Faktor in % | 0 | 15 | 30 | 32 | 75 | 100 |
| 0 = 0 | 200[N] | 200[N] | 250[N] | 500[N] | 500[N] | 0[N] |
| 1 = 25 | 200[N] | 300[N] | 350[N] | 500[N] | 500[N] | 0[N] |
| 2 = 50 | 200[N] | 350[N] | 400[N] | 500[N] | 500[N] | 0[N] |

Im Bereich der Synchronisation (zwischen 15 und 30 % des zu schaltenden Weges bei Einlegen des Ganges) wird, wie im Beispiel der Tabelle gezeigt, die Schaltkraft in Abhängigkeit von der Fahrsituation vorgegeben. Nach Abschluß der Synchronisationsphase, z.B. bei 35 %, wird die Kraft stark erhöht, um ein schnelles Durchschalten zu bewirken. Bei Erreichen der Zielposition 100 % des Schaltweges, wenn der Gang vollständig eingelegt ist, wird die Kraft auf Null abgebaut und die Endlagenregelung für die Kraft wird aktiviert. Diese stellt sicher, daß nur dann Kraft auf das Schaltsystem gegeben wird, wenn die Position des Schaltmechanismus stark von der vorgegebenen Position abweicht. (Zur Vermeidung von Gangspringern z.B. Abweichung von 100 % nach 75 % oder nach 120 %).

Beispiel:

Tabelle 4:

| Kraftregelung in der Endlage geht der Mechanismus über den def. Zielwert hinaus, wird der Weg > 100 %. | | | | | | |
|---|---|---|---|---|---|---|
| Schalt-Weg [%] (WE) | 80 | 95 | 100 | 105 | 110 | 120 |
| Schalt-Kraft [N] (F$_{Sch}$) | 500 | 200 | 0 | 200 | 500 | 500 |

Verbleibt der Schaltmechanismus in der korrekten Endlage, wird keine Kraft aufgegeben und somit werden die Schaltgabeln nicht verschlissen. Bei grösseren Abweichungen wird die Kraft erhöht, um damit aktiv den Schaltmechanismus in die korrekte Endlage zurückzubringen (siehe Beispiel in der Tabelle).

Da jeder Gang in Richtung eines Hochschaltens oder in Richtung eines Herunterschaltens betätigt werden kann, sind für jeden Gang zwei Tabellen angelegt (analog Tabelle 3) . In der Tabelle für das Hochschalten sind dabei niedrigere Kräfte für das Synchronisieren angesetzt als in der Tabelle für das Herunterschalten.

Das Einlegen eines Ganges kann in Phasen eingeteilt werden:

- Anfahren der Synchronisation
- Synchronisation
- Durchschalten und Herstellen einer formschlüssigen Verbindung
- Erreichen der Endlage

In Abhängigkeit dieser Phasen werden die Kräfte eingestellt. So würde in der Synchronisationsphase, bei der die Synchronisation die Differenzdrehzahl zwischen der Welle und dem zu schaltenden Zahnrad durch Reibung angleichen muß, eine zu hohe Schaltkraft zu erhöhtem Verschleiß oder Zerstörung der Synchronisierung führen. Beim Durchschalten hingegen kann durch eine hohe Schaltkraft nichts beschädigt werden und zur Erzielung einer kurzen Schaltzeit wird deshalb auch die Schaltkraft auf das Maximum erhöht.

Beeinflussung der Betriebsweise des Verbrennungsmotors:

Um eine möglichst komfortable Schaltung zu erzielen, kann infolge der dabei auftretenden starken Beschleunigungsänderungen das Drehmoment des Motors nicht schlagartig weggenommen werden. Daher muß eine Beeinflussung der Betriebsweise des Verbrennungsmotors sorgfältig gesteuert erfolgen.

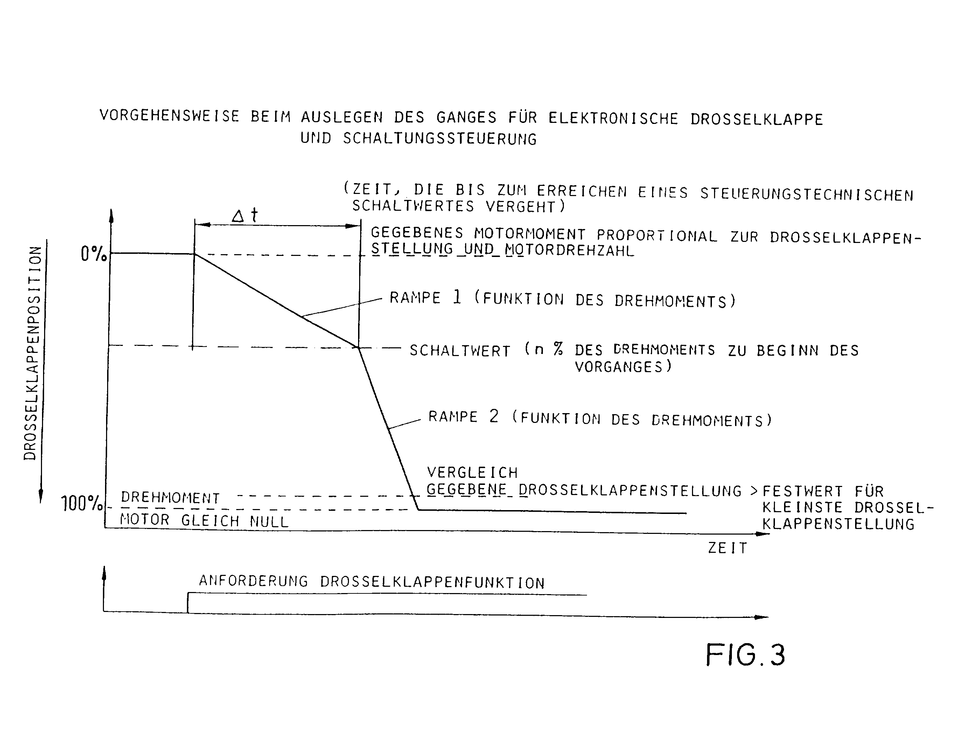

Im vorliegenden Beispiel wird diese Funktion durch einen Drosselklappeneingriff (siehe Fig. 3) dargestellt. Die elektronische Drosselklappe schließt vor dem Schaltvorgang geregelt, bleibt während des Schaltvorganges geschlossen (um ein Durchgehen des Motors zu verhindern) und öffnet nach dem Schaltvorgang wieder geregelt. Der Öffnungs- und Schließvorgang wird in Abhängigkeit von der Last des Motors vor der Schaltung geregelt.

Allgemein gesagt, wird durch das geregelte Schließen und Öffnen der Drosselklappe ein gewünschter Ab- und Aufbau des Drehmoments um den Schaltvorgang herum erzielt, der wesentlichen Einfluß auf den Komfort des Schaltvorganges hat.

Infolge des stark nichtlinearen Drehmomentkennfeldes von Verbrennungsmotoren ist es sinnvoll, nicht die Drosselklappenstellung zu steuern, sondern es ist besser, das Drehmoment abzubauen. Damit soll in Abhängigkeit von der jeweiligen Lastsituation (Last = f (Motordrehzahl, Drosselklappenstellung) ein gleichförmiger Abbau des Drehmoments erreicht werden.

Ist die von der Drosselklappe einzustellende Drehzahl kleiner als z.B. 700 min$^{-1}$, so wird die elektronische Drosselklappe gemäß Rampe 1 und Rampe 2 geregelt, d.h., das Drehmoment wird ab- bzw. aufgebaut. Wird dieser Wert überschritten, so wird auf eine Solldrehzahl geregelt, die in Abhängigkeit von der nächsten zu schaltenden Gangstufe bestimmt wird.

Bei Schließen der Drosselklappe sollen die Gradienten als Funktion des Startdrehmomentwertes bei Auslösung des Schaltvorganges kalibrierbar sein. Damit wird ein sanftes, langsames Schließen bei wenig geöffneter Drosselklappe und ein schnelles Schließen bei weit geöffnteter Drosselklappe möglich. Eine gezielte Beeinflussung des Schaltkomforts wird durch die Kalibration der Drosselklappenbetätigung erreicht.

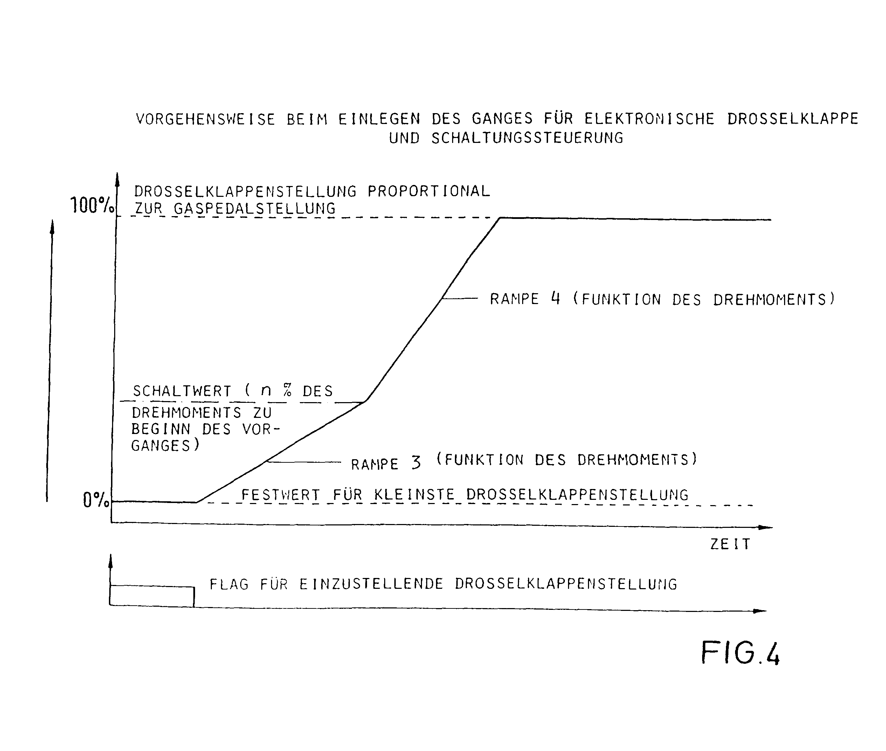

Beim Öffnen der Drosselklappe nach Abschluß der Schaltung sollen die Gradienten des Drosselklappenwinkels in Abhängigkeit des Zieldrehmomentwertes (Funktion der aktu. Pedalposition) kalibrierbar sein. (Siehe hierzu Fig. 4.)

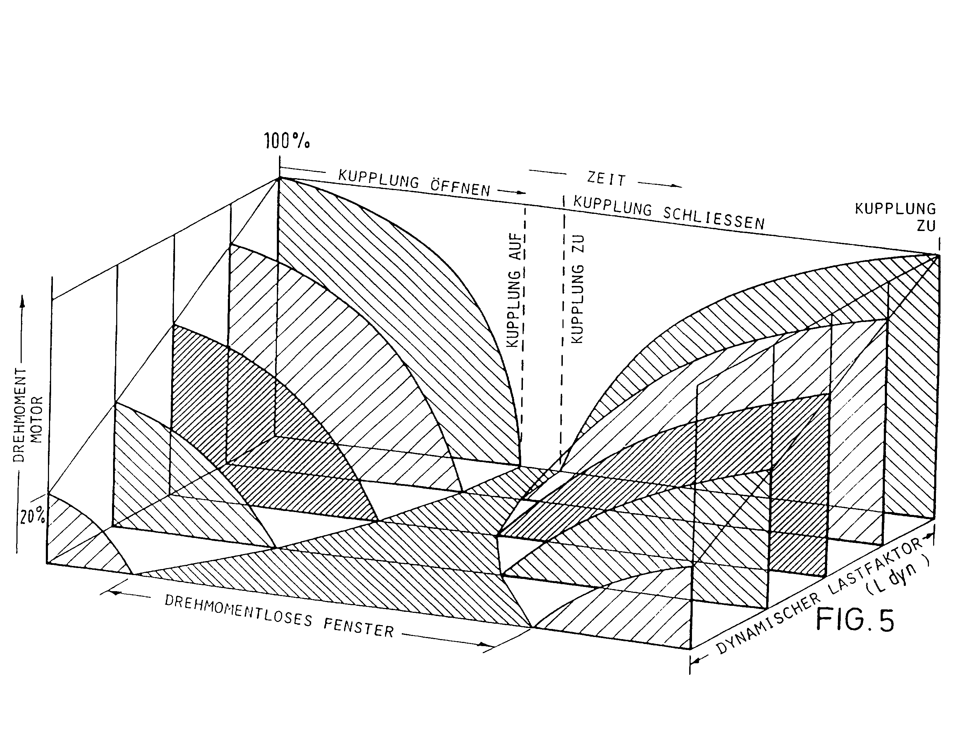

Wie aus Fig. 5 zu ersehen ist, sorgt die Kupplungssteuerung ebenso dafür, daß während der durchzuführenden Schaltung ein "drehmomentloses Fenster" vorgesehen wird, wobei in Abhängigkeit vom dynamischen Lastfaktor der Zeitbereich, in dem die Kupplung offen ist, gesteuert wird, d.h., bei niedriger Last wird eine größere Zeitspanne zugelassen, wohingegen bei einer größeren Last die Zeitspanne geringer gehalten wird.

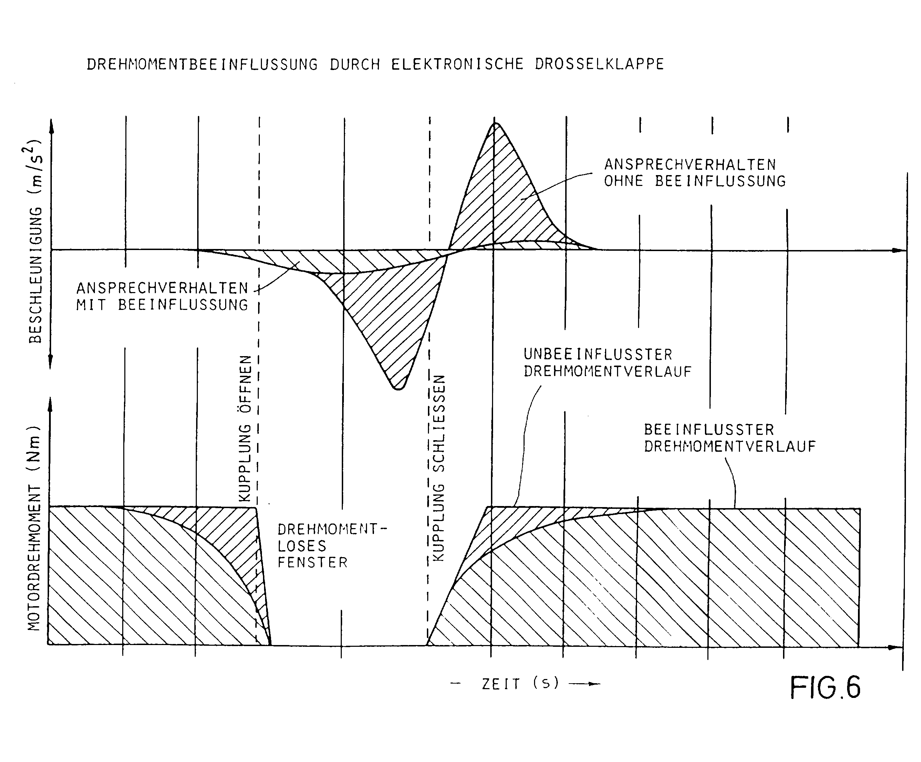

Wie aus Fig. 6 zu ersehen ist, ergibt sich durch die Beeinflussung der Betriebsweise des Verbrennungsmotors über die elektronische Drosselklappe ein sanfter Übergang beim Ab- und Aufbau des Drehmomentverlaufes.

**Patentansprüche**

1. Automatisch schaltbares Vorgelege-Wechselgetriebe, insbesondere für Kraftfahrzeuge, mit einer in einem Getriebegehäuse (1) angeordneten Vielzahl von miteinander ständig in Eingriff stehenden Zahnradpaaren und Synchronisiereinrichtungen, die über von einer elektronischen Steuerung (10) selektiv angesteuerten Hilfskrafteinrichtungen (4 und 5) betätigten Schalteinrichtungen (2 und 3) betätigbar sind, wobei über ein elektronisches Leistungssteuerorgan eine Beeinflussung des Antriebsmotors (25) während des Ausführens von Gangwechseln vorgesehen ist und wobei alle für die Hilfskrafteinrichtungen (4 und 5) erforderlichen Bauelemente, wie Hydraulikpumpe (7), Reservoire (8) und die hydraulischen Betätigungszylinder (4 und 5) in einer am Getriebegehäuse (1) anbringbaren Baueinheit zusammengefaßt sind,
**dadurch gekennzeichnet**, daß

- zum Beginn jeder Schaltbewegung der Weg zwischen der aktuellen Ausgangsposition und der Zielposition zu 100% jeder Hilfskrafteinrichtung (4, 5) normiert festgelegt wird, wodurch abhängig von der Position der jeweiligen Hilfskrafteinrichtung verschiedene Funktionsphasen, nämlich eine Anfahrphase, eine Synchronisationsphase, eine Durchschaltphase und eine Eindockphase festgelegt werden,
- die aktuellen Positionen der Hilfskrafteinrichtungen über Sensoren erfaßt werden und über Leitungen (12, 13) einem Ventilkontrollrechner (9) zugeführt werden,
- ein von einem aus der vorhandenen Drehzahldifferenz zwischen dem geschalteten und dem zu schaltenden Gang ermittelten ersten Faktor sowie von einem die Fahrsituation auf der Seite des Fahrerwunsches erfaßenden zweiten Faktor abhängiger dynamischer Lastfaktor ermittelt wird,
- für jede Gangstufe und jede Gangrichtung, nämlich Hochschalten und Herunterschalten, ein 3-dimensionales Schaltkraft-Kennfeld vorhanden ist, in dem die Schaltkraft ($F_{sch}$) in Abhängigkeit von der Position (WE) der jeweiligen Hilfskrafteinrichtung und vom dynamischen Lastfaktor ($L_{dyn}$) abgelegt ist, wobei die abgelegten Schaltkräfte mit dem Lastfaktor steigen, wobei ferner für eine gegebene Gangstufe, eine gegebene Gangrichtung und einen gegebenen dynamischen Lastfaktor, die abgelegten Schaltkräfte während der Synchronisationsphase niedriger, während der Durchschaltphase höher und während der Eindockphase geringer sind, wobei ferner für eine gegebene Gangstufe, einen gegebenen dynamischen Lastfaktor und eine gegebene Position die abgelegten Schaltkräfte für das Hochschalten geringer sind als für das Herunterschalten, und
- der Ventilkontrollrechner die Schaltkraft über den Schaltweg entsprechend variiert.

2. Automatisch schaltbares Vorgelege-Wechselgetriebe, insbesondere für Kraftfahrzeuge, nach Anspruch 1, **dadurch gekennzeichnet**, daß

- vor der Durchführung einer Schaltung eine Modulation des Antriebsmotordrehmoments in Richtung Absenken des Antriebsmotordrehmoments und
- nach Durchführung einer Schaltung eine Modulation des Antriebsmotordrehmoments in Richtung Anheben des Antriebsmotordrehmoments vorgenommen wird, wobei
- die Modulation des Antriebsmotordrehmoments durch ein 3-dimensionales Kennfeld (Fig. 5) bestimmt wird, in dem das Antriebsmotordrehmoment (Md) in Abhängigkeit von der Zeit (T) abgelegt ist.

3. Automatisch schaltbares Vorgelege-Wechselgetriebe, insbesondere für Kraftfahrzeuge, nach Anspruch 2, **dadurch gekennzeichnet**, daß

- die automatische Kupplungssteuerung (25) in Abhängigkeit vom dynamischen Lastfaktor ($L_{dyn}$) ein "drehmomentloses Fenster" während der Durchführung von Schaltungen bereitstellt, wobei das drehmomentlose Fenster bei niedrigem Lastfaktor größer und bei höherem Lastfaktor kleiner gehalten wird.

## Claims

1. An automatically shiftable layshaft change-speed gearbox, particularly for motor vehicles, comprising a gearbox casing (1) housing a plurality of pairs of gearwheels which are constantly in mesh with one another and synchronising devices which can be actuated by means of shifting devices (2 and 3) actuated by servo devices (4 and 5) which are selectively controlled by an electronic control module (10), modulation of the driving engine during the execution of gear shifts being provided by electronic power control means (25) and all the components, such as hydraulic pumps (7), reservoirs (8) and the hydraulic actuating cylinders (4 and 5) required for the servo devices (4 and 5) being included in a constructional unit which can be attached to the gearbox casing (1), characterised in that

- at the start of each shift movement the travel between the current starting position and the target position is standardised at 100% of each servo device (4, 5), thereby establishing, depending on the position of the respective servo device, various function phases, namely a run-up phase, a synchronisation phase, a shift-through phase and a dog-in phase,
- the current positions of the servo devices are detected by means of sensors and are supplied via leads (12, 13) to a valve control computer (9),
- a dynamic load factor, dependent on a first factor determined from the difference in engine speed between the current gear and the gear to be engaged and on a second factor acquired from the driving situation as desired by the driver, is determined,
- for each gear step and each gear direction, namely upshifting and downshifting, there is a three-dimensional shift force characteristic map in which the shift force (Fsch) is specified as a function of the position (WE) of the respective servo device and of the dynamic load factor (Ldyn), the specified shift forces increasing with the load factor, and further, for a given gear step, a given gear direction and a given dynamic load factor, the shift forces being lower during the synchronisation phase, higher during the shift-through phase, and smaller during the dog-in phase, and further, for a given gear step, a given dynamic load factor and a given position, the specified shift forces being smaller for upshifting than for downshifting, and
- the valve control computer correspondingly varies the shift force along the shift travel.

2. An automatically shiftable layshaft change-speed ggearbox, particularly for motor vehicles, as claimed in claim 1, characterised in that

- before execution of a shift a modulation of the driving engine torque in the direction of lowering the engine torque is performed and
- after executing a shift a modulation of the driving engine torque in the direction of raising the engine torque is performed,
- the modulation of the driving engine torque being determined by a 3-dimensional characteristic map (Fig. 5) in which the driving engine torque (Md) is specified as a function of the time (T).

3. An automatically shiftable layshaft change-speed gearbox, particularly for motor vehicles, as claimed in claim 2, characterised in that

- the automatic clutch control unit (25) provides, as a function of the dynamic load factor (Ldyn), a "zero torque window" during the execution of shifts, the zero torque window being kept larger at low load factor and smaller at higher load factor.


**Revendications**

1. Boîte de vitesses automatique à arbre de renvoi, notamment pour automobiles, munie d'un grand nombre de paires d'engrenages engagés les uns dans les autres en permanence et de dispositifs de synchronisation, placés dans un carter d'engrenages (1) et qui peuvent être commandés par des dispositifs de commutation (2 et 3) commandés par une commande électronique (10) activée de façon sélective par des dispositifs de force auxiliaire (4 et 5), une influence du moteur d'entraînement (25) par un organe électronique de réglage de puissance étant prévue pendant l'exécution de changements de vitesses, et tous les éléments de construction nécessaires aux dispositifs de force auxiliaire (4 et 5), comme la pompe hydraulique (7), les réservoirs (8) et les cylindres de commande hydrauliques (4 et 5), étant réunis dans une unité de construction pouvant être installée dans le carter d'engrenages (1), **caractérisée en ce qu'**au début de chaque mouvement de commutation, la trajectoire entre la position de départ actuelle et la position finale est déterminée de façon normalisée à 100% de chaque dispositif de force auxiliaire (4, 5), différentes phases de fonctionnement, à savoir une phase de démarrage, une phase de synchronisation, une phase de changement de vitesses et une phase de mise en cale, étant déterminées selon la position du dispositif de force auxiliaire respectif, **en ce que** les positions actuelles des dispositifs de force auxiliaire sont détectées à l'aide de capteurs et amenées à un ordinateur de contrôle des soupapes (9) par des lignes (12, 13), **en ce qu'**un facteur de charge dynamique est déterminé, qui dépend d'un premier facteur calculé à partir de la différence de vitesse existant entre la vitesse passée et la vitesse à passer ainsi que d'un second facteur prenant en compte la situation de circulation désirée par le conducteur, **en ce que** pour chaque étage de boîte de vitesse et chaque direction de changement de vitesse, à savoir monter ou descendre les vitesses, il y a un champ caractéristique de force de commutation ou de changement de vitesses à trois dimensions, dans lequel la force de commutation ou de changement de vitesses ($F_{sch}$) est classée en fonction de la position (WE) du dispositif de force auxiliaire respectif et du facteur de charge ($L_{dyn}$) dynamique, les forces de commutation classées augmentent avec le facteur de charge, les forces de commutation classées étant, en outre, pour un étage donné, pour une direction de vitesse donnée et pour un facteur de charge dynamique donné, plus basses pendant la phase de synchronisation, plus hautes pendant la phase de changement de vitesses, et plus réduites pendant la phase de mise en cale, les forces de commutation classées étant, par ailleurs, pour un étage donné, pour un facteur de charge dynamique donné et pour une position donnée, plus réduites pour monter les vitesses que pour descendre les vitesses, et **en ce que** l'ordinateur de contrôle des soupapes modifie la force de commutation durant la trajectoire de commutation ou de changement de vitesses de façon correspondante.

2. Boîte de vitesses automatique à arbre de renvoi, notamment pour automobiles, selon la revendication 1, **caractérisée en ce qu'**avant l'exécution d'un changement de vitesses, une modulation du couple d'entraînement du moteur a lieu dans le sens de la réduction ou de la descente du couple d'entraînement du moteur et qu'après l'exécution d'un changement de vitesses, une modulation du couple d'entraînement du moteur a lieu dans le sens de la montée ou de l'augmentation du couple d'entraînement du moteur, la modulation du couple d'entraînement du moteur étant définie par un champ caractéristique à 3 dimensions (figure 5), dans lequel le couple d'entraînement du moteur (Md) est classé en fonction du temps (T).

3. Boîte de vitesses automatique à arbre de renvoi, notamment pour automobiles, selon la revendication 2, **caractérisée en ce que** la commande d'embrayage (25) automatique prépare, en fonction du facteur de charge dynamique ($L_{dyn}$) une « fenêtre sans couple d'entraînement » pendant l'exécution des changements de vitesses, la fenêtre sans moment de rotation étant maintenue plus grande en cas de facteur de charge plus bas et plus petite en cas de facteur de charge plus élevé.

FIG.1

MOTORDREHZAHL

FAHRZEUGGESCHWINDIGKEIT

ZU-/RÜCKLAUF-
LEITUNG

ZU-/RÜCKLAUF-
LEITUNG

ISTWERTE

SOLLWERTE

OFFENER REGELKREIS
POSITION UND SCHALTKRAFT

HERAUF / HERUNTER
SCHALTEN

WAHLMODUS:
VOLLAUTOMAT/
SEMIAUTOMAT

POSITIONSRÜCKMELDUNG (WE)

POSITIONSRÜCKMELDUNG (WS)

GESCHLOSSENER REGELKREIS FÜR POSITIONSKONTROLLE

EP 0 839 295 B1

FIG.2

VORGEHENSWEISE BEIM AUSLEGEN DES GANGES FÜR ELEKTRONISCHE DROSSELKLAPPE
UND SCHALTUNGSSTEUERUNG

(ZEIT, DIE BIS ZUM ERREICHEN EINES STEUERUNGSTECHNISCHEN
SCHALTWERTES VERGEHT)

GEGEBENES MOTORMOMENT PROPORTIONAL ZUR DROSSELKLAPPEN-
STELLUNG UND MOTORDREHZAHL

RAMPE 1 (FUNKTION DES DREHMOMENTS)

SCHALTWERT (n % DES DREHMOMENTS ZU BEGINN DES
VORGANGES)

RAMPE 2 (FUNKTION DES DREHMOMENTS)

VERGLEICH
GEGEBENE DROSSELKLAPPENSTELLUNG > FESTWERT FÜR
KLEINSTE DROSSEL-
KLAPPENSTELLUNG

DREHMOMENT
MOTOR GLEICH NULL

Δ t

0%

100%

DROSSELKLAPPENPOSITION

ZEIT

ANFORDERUNG DROSSELKLAPPENFUNKTION

FIG.3

EP 0 839 295 B1

VORGEHENSWEISE BEIM EINLEGEN DES GANGES FÜR ELEKTRONISCHE DROSSELKLAPPE
UND SCHALTUNGSSTEUERUNG

DROSSELKLAPPENSTELLUNG PROPORTIONAL
100% ZUR GASPEDALSTELLUNG

— RAMPE 4 (FUNKTION DES DREHMOMENTS)

SCHALTWERT ( n % DES
DREHMOMENTS ZU
BEGINN DES VOR-
GANGES)

— RAMPE 3 (FUNKTION DES DREHMOMENTS)

0% FESTWERT FÜR KLEINSTE DROSSELKLAPPENSTELLUNG

ZEIT

FLAG FÜR EINZUSTELLENDE DROSSELKLAPPENSTELLUNG

FIG.4

FIG. 5

DREHMOMENTBEEINFLUSSUNG DURCH ELEKTRONISCHE DROSSELKLAPPE

FIG.6

EP 0 839 295 B1